# EUROPEAN PATENT APPLICATION

(11) **EP 1 321 069 A1**
(43) Date of publication of application: **25.06.2003**
(21) Application number: 02425735.4
(22) Date of filing: 28.11.2002
(51) Int. Cl.: A47B 87/02, A47B 47/02

(54) **A joint element for a bearing structure, in particular for metal shelving**

(30) Priority: 21.12.2001 IT MO20010038 U
(71) Applicant: Gastaldello, Michelle, 36100 Vicenza (IT)
(72) Inventor: Gastaldello, Michelle, 36100 Vicenza (IT)
(74) Representative: Gotra, Stefano

(57) **Abstract**

A joint element (1) for a bearing structure, in particular for metal shelving, comprises a block (2) having two opposite coupling parts (3) each having an external lateral surface predisposed to joint-couple with a conical coupling with an internal surface of a tubular bearing upright (5). A central part of the block (2) comprises two lateral walls which are opposite and parallel one to another, between which a hollow space is defined, open on two opposite sides; the space is predisposed for joint-insertion, through each of the two openings on the sides, of an end of a support beam (7) of the bearing structure extended in a perpendicular direction to a longitudinal axis of the block (2). Each lateral wall exhibits two brackets (8) which project externalwise of the block (2) which are provided with holes for fastening an end of at least one auxiliary element of the bearing structure.

## Description

Specifically, though not exclusively, the invention is applicable to metal shelving for industrial use for storing objects of considerable weight and size, in particular for palletised loads.

The prior art comprises a considerable number of different solutions for realising metal shelving.

The main aim of the present invention is to provide a joint element for a bearing structure, which can be used in particular as a shelving for industrial use, and which enables a simplification and greater practicality and ease of storing; the structure is also easier to assemble with the element.

An advantage of the invention is that it provides a joint and relative bearing structure which are simple constructionally and economical.

A further advantage is the constructional sturdiness of the bearing structure made using the joint element of the invention.

A further advantage of the invention is that it enables simple and rapid availability of a range of accessory equipment which are considerably practical and useful in industrial shelving.

These aims and advantages and others besides are all attained by the present invention, as it is characterised in the claims that follow.

Further characteristics and advantages of the present invention will better emerge from the detailed description that follows of a preferred but non-exclusive embodiment of the invention, illustrated purely by way of a nonlimiting example in the accompanying figures of the drawings, in which:

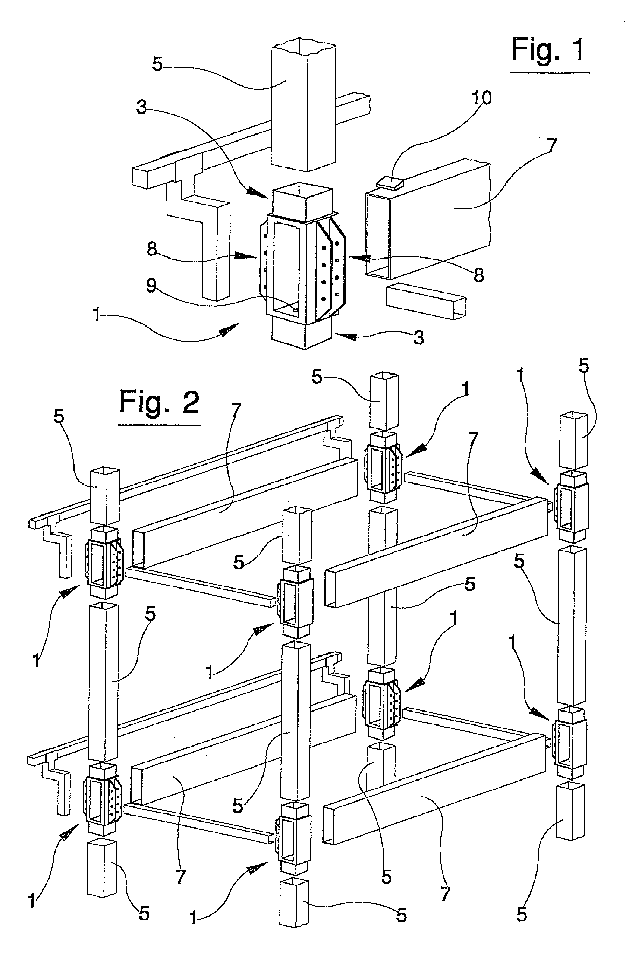

figure 1 is a perspective view of a shelving made using the object of the invention;

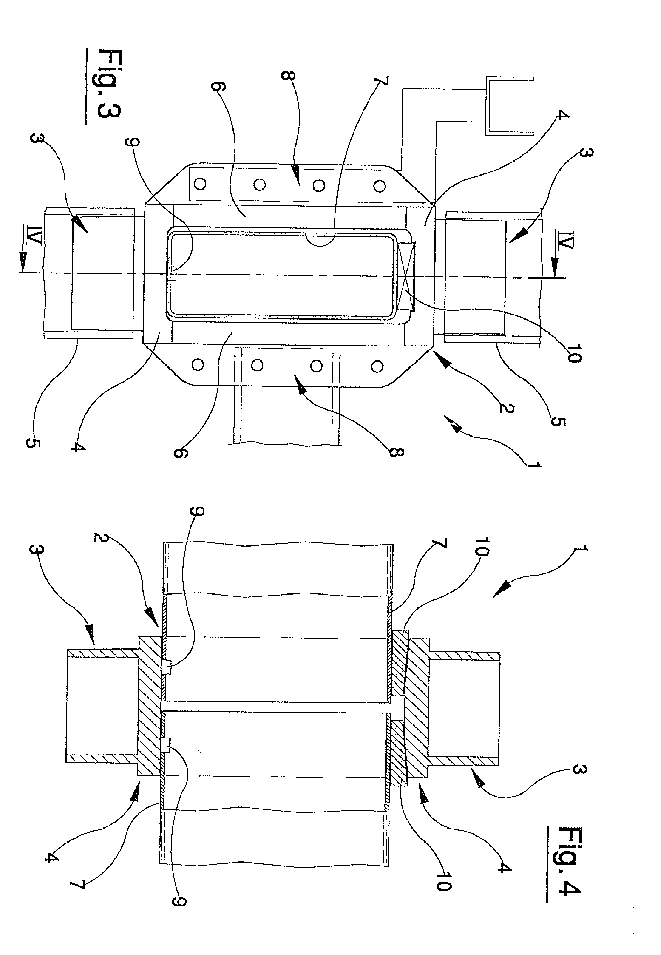

figure 2 is an enlarged detail of figure 1;
figure 3 is a lateral view of a joint of the shelving;
figure 4 is section IV-IV of figure 3.

With reference to the figures of the drawings, 1 denotes in its entirety a joint element for a bearing structure, in particular for an industrial metal shelving. The joint element 1 comprises a metal block 2 made in a single piece by diecasting.

The joint element 1 is elongate in a longitudinal direction and is destined to be positioned vertically. In the following description reference will be made to the specific use of the joint element 1 in a metal shelving including several joints, in which the longitudinal axis of each joint element 1 is vertically arranged.

Obviously this does not represent a limitation to the present invention, as it would be possible to use the joint to realise other types of bearing structures having longitudinal structural elements joined to the various joint elements 1 in which the longitudinal axis of each joint element 1 was arranged horizontally or obliquely.

The joint element 1 has on each of two opposite ends, an upper and a lower end, an axial coupling part 3 which projects from a relative shoulder. The shoulder is fashioned from a part of the block 2, an annular frame 4 projecting laterally, with transversal dimensions that are greater than those of the axial coupling part 3. The two axial coupling parts 3 are coaxial one to another and opposite. Each axial coupling part 3 has a tubular shape with a rectangular or square straight transversal section, advantageously strengthened by a diagonal ribbing. Each axial coupling part 3 has an external lateral surface which is predisposed to joint-couple with an internal surface of a tubular bearing bar (in the illustrated embodiment an upright 5) of the bearing structure which is extended in the direction of the longitudinal axis of the block. The external lateral surface is trunco-pyramidal with a square or rectangular base and with a slightly conical shape which tapers axially towards the outside of the block. The slightly conical shape enables a conical coupling between the joint element 1 and the upright 5, which can be stabilised by a pin to prevent the joined elements from coming apart.

A central part of the block comprised between the two opposite ends comprises two lateral walls 6 which are opposite to one another and parallel to the longitudinal axis of the block. A hollow open space is afforded between the vertically-disposed walls 6, which space is open on two opposite sides in a perpendicular direction to the longitudinal axis. The two opposite openings of the hollow space are rectangular and both lie vertically parallel to the longitudinal axis of the block. The hollow space is predisposed for insertion, through each of the two openings on the sides, of a support beam 7, part of the bearing structure, which is extended in horizontal direction, i.e. perpendicular to the longitudinal axis of the block. The hollow space can represent a double housing for ends of the two beams 7 aligned to the bearing structure. The hollow space can also be used for housing an intermediate part of a single beam.

At least one of the lateral walls 6 (in the illustrated embodiment both walls) exhibits at least one bracket 8 which projects externalwise of the block and which is provided with means for fixing an end of at least one auxiliary element of the bearing structure. The auxiliary element can be, for example, a support bar for a brace for the structure, or a support bracket for safe containment of a load resting on the shelving. In the illustrated embodiment, each lateral wall 6 has two brackets 8, parallel to one another and side-by-side, between which an end of any auxiliary element can be inserted and fixed.

The means for fixing predisposed on each staff 8 comprise, in the illustrated embodiment, one or more holes for enabling fixture of the end of the auxiliary element by means of a screw-type fastening. Each bracket 8, which comprises a flat wall normal to the lateral wall of the block, exhibits a plurality of holes arranged in a line in the direction of the longitudinal axis of the block.

The cast block internally exhibits a first surface which is normal to the longitudinal axis of the block, and which delimits on one side (preferably the lower part) the hollow space which functions as a seating for the housing of the two co-aligned beams 7 or the single beam. This first surface, which in the illustrated embodiment is horizontally arranged, exhibits at least one pin 9 projecting axially which is predisposed to joint-couple in a cavity afforded in the end of the support beam inserted in the hollow space. In the illustrated embodiment there are two coupling pins, one for each beam; two or more pins could be included if so desired.

The block further exhibits a second surface, opposite to the first surface, which is provided on at least a side thereof which delimits an opening of the hollow space with a cavity provided with an inclined surface for receiving a fastening wedge 10 inserted between the second surface and the end of the support beam 7 of the bearing structure.

The horizontal beam 7 is inserted in the hollow seating located in the centre of the block, where a first coupling is made between the hole in the beam 7 and the pin 9 projecting from the bottom of the housing. This first coupling prevents horizontal sliding of the beam 7. Further blocking of the beam 7 to the joint element 1 is done by inserting the wedge 10 between the beam 7 and the upper surface of the housing.

This coupling between the joint element 1 and the beam 7 gives rise to a solid union which prevents sliding and play, and gives a high degree of stability to the shelving, also enabling an advantageous containing of flexion of the bar. As previously mentioned, the coupling between the joint element 1 and the two segments, upper and lower, of the upright, is achieved by conical jointing with an advantageous presence of a safety pin.

The shelving can be completed by longitudinal elements, diagonal or crossbars, constituted by pipes having a square or rectangular section, which are inserted in the space comprised between the lateral brackets projecting from the central part of the block and which are fixed to the brackets preferably by screw-couplings which use the holes already made in the brackets. In the same way other auxiliary elements can be assembled, such as support brackets for the back and front of the shelving.

The bearing structure can further comprise simplified joint elements for ends of the structure, predisposed to receive a smaller number of structural elements, even one only thereof.

Various functions are ascribed to the joint element 1: jointing an upright, both above and below; jointing horizontal elements, on two sides thereof; fixing accessory elements, such as strengthening brackets; a bracket function for antifall front and back elements; connection elements for reciprocal blocking of the shelving or for blocking the wall shelving, and so on.

The various longitudinal elements of the structure (uprights, horizontal beams, diagonal elements, crossbars, and so on) are preferably made of tubular elements having square or rectangular sections, specially cut to the correct lengths and provided if necessary with a hole at ends thereof for fastening to the joint element 1. The mechanical operations for setting up the bearing structure consist simply in cutting the tubular elements and holing them, which can be done by inexpensive elementary machines. These operations, thanks to their simplicity, can be done by a third party other than the producer of the joint element 1 or the tubular elements; the operations could be carried out in a second stage, after transport of the material to the installation place, and immediately before the assembly of the shelving. This would limit the transport costs without creating any problem for the installer, who would indeed enjoy a certain degree of freedom and versatility in the organisation of the storing operations and the material preparation operations, as well as in the assembly operations themselves.

The jointed shelving of the invention offers great practicality in assembly operations and also contains assembly costs, thanks to the fact that the single elements making up the structure are of modest size and weight and automatic lifting means are not absolutely necessary.

## Claims

1. A joint element for a bearing structure, in particular for metal shelving, comprising a block (2) extended along a longitudinal axis, arranged vertically, having on each of two opposite ends thereof an axial coupling part (3) which has an external lateral surface predisposed for joint-coupling with an internal surface of a tubular upright (5) of the bearing structure, extended according to a longitudinal axis of the block (2); a central part of the block (2) comprised between the two opposite ends comprises two lateral walls (6) opposite and parallel to one another, and parallel to the longitudinal axis of the block (2), between which a hollow space is open on two opposite sides thereof; the space being predisposed for joint-insertion, through each of the two open sides of the space, of an end of a support beam (7) of the bearing structure which is extended in length in a perpendicular direction to the longitudinal axis of the block (2).

2. The joint element of claim 1, **characterised in that** at least one of the lateral walls (7) exhibits at least one bracket (8) which projects externalwise of the block (2) and which is provided with means for fixing an end of at least one auxiliary element of the bearing structure.

3. The joint element of claim 2, **characterised in that** at least one of the lateral walls (7) exhibits two brackets (8), parallel to one another and located side-by-side, between which an end of the auxiliary element will be inserted and fastened.

4. The joint element of claim 2 or 3, **characterised in that** the means for fixing predisposed on the bracket (8) comprise one or more holes to enable a fastening of the end of the auxiliary element by means of a screw coupling.

5. The joint element of claim 4, **characterised in that** the bracket (8) comprises a flat wall which is normal to the lateral wall of the block (2) and which exhibits a plurality of the holes arranged in a line in a direction of the longitudinal axis of the block (2).

6. The joint element of any one of the preceding claims, **characterised in that** each axial part (3) for coupling has an external lateral surface having a slightly conical shape in order to realise a conical coupling with an internal surface of the bearing tubular upright (5).

7. The joint element of any one of the preceding claims, **characterised in that** the block (2) exhibits a first surface which is normal to a longitudinal axis thereof, which first surface delimits on one side thereof the hollow space and which exhibits at least one pin (9) projecting axially and being predisposed to joint-couple with a cavity in an end of the support beam (7) inserted in the hollow space.

8. The joint element of claim 7, **characterised in that** the block (2) exhibits a second surface, provided on at least one edge thereof delimiting an opening of the hollow space, with a cavity having an inclined surface predisposed to receive a fixing wedge (10) inserted between the second surface and the end of the support beam (7) of the bearing structure.

9. The joint element (1) of any one of the preceding claims, **characterised in that** each axial coupling part (3) has a tubular shape with a straight transversal section of rectangular or square shape.

10. The joint element of any one of the preceding claims, **characterised in that** the axial coupling part (3) projects from a relative annular shoulder of the block (2).

11. A bearing structure comprising one or more joint elements (1) to each of which at least one tubular bearing upright (5) is fixed and at least one support beam (7) is fixed, with a possibility to further fix at least one auxiliary element, all of which upright (5), beam (7) and auxiliary element are made according to any one of the preceding claims.
